# EUROPÄISCHE PATENTANMELDUNG

(11) **EP 4 397 599 A1**
(43) Veröffentlichungstag der Anmeldung: **10.07.2024**
(21) Anmeldenummer: 24150919.9
(22) Anmeldetag: 09.01.2024
(51) Int. Cl.: B65D 81/24, B01J 4/02, A61L 2/18

(54) **ZUFÜHRVORRICHTUNG**

(30) Priorität: 09.01.2023 DE 102023100276
(71) Anmelder: Schlitt, Uwe Michael, 64295 Darmstadt (DE)
(72) Erfinder: Schlitt, Uwe Michael, 64295 Darmstadt (DE)
(74) Vertreter: Zellentin & Partner mbB Patentanwälte

(57) **Zusammenfassung**

Die vorliegende Erfindung betrifft eine Vorrichtung (Zuführvorrichtung) mit der man einer Dosiervorrichtung für fließfähige Zusammensetzungen flüssige Medien zuführen kann sowie eine Zusammensetzung für den Einsatz in Dosiervorrichtungen, die es ermöglicht wässrige Medien, speziell Farbmittelzubereitungen für Bautenfarben, vor mikrobiellem Befall zu schützen.

## Beschreibung

### HINTERGRUND DER ERFINDUNG

Die vorliegende Erfindung betrifft eine Vorrichtung (Zuführvorrichtung) mit der man einer Dosiervorrichtung für fließfähige Zusammensetzungen, z.B. einer Farbmitteldosieranlage (auch als Farbenmischmaschine oder Dispenser bezeichnet) flüssige Medien, z.B. wenigstens ein Additiv, zuführen kann. Die Zuführvorrichtung ist eine eigenständige Baugruppe und ermöglicht die kontaminationsarme oder kontaminationsfreie Bereitstellung und Dosierung von flüssigen Medien in einem geschlossenen System aus austauschbaren Gebinden, die über ein Leitungssystem mit integrierter Fördervorrichtung mit der eigentlichen Dosiervorrichtung verbunden sind. Die Erfindung betrifft weiterhin eine Zusammensetzung für den Einsatz in Dosiervorrichtungen, die es ermöglicht wässrige Medien, speziell Farbmittelzubereitungen für Bautenfarben, vor mikrobiellem Befall zu schützen, ohne die Gesundheit von Menschen und Tieren zu gefährden und die Umwelt zu belasten.

### STAND DER TECHNIK

Eine Vielzahl von Zwischen- und Endprodukten in Form von fließfähigen Zusammensetzungen unterlaufen vor ihrer Weiterverarbeitung oder der Konfektionierung für einen Endverbraucher einen Dosierschritt. Herkömmliche Dosiervorrichtungen für fließfähige Zusammensetzungen weisen in der Regel wenigstens einen Vorratsbehälter auf, wobei es sich vielfach noch um offene Systeme handelt, bei denen die Vorratsbehälter von außen mit dem Dosiergut befüllt werden.

Herkömmliche Dosiervorrichtungen für flüssige Farbmittel weisen in der Regel wenigstens einen Vorratsbehälter auf, der zur Entnahme des Mediums über mechanische oder elektrische Pumpen angesteuert wird. Dabei handelt es sich in der Regel um offene Systeme, in denen die Vorratsbehälter von außen befüllt werden. Die Behälter verfügen dazu beispielsweise über abnehmbare Deckel. Besondere Anforderungen werden an Dosieranlagen für flüssige Medien gestellt, die Feststoffteilchen enthalten oder bei denen potentiell die Möglichkeit besteht, dass sich in ihnen Feststoffteilchen ausbilden. Dazu zählen z. B. Suspensionen, d. h. Dispersionen von unlöslichen Feststoffteilchen in Flüssigkeiten, aber auch teilerstarrte Schmelzen oder flüssige Medien mit Feststoffteilchen, die durch Auskristallisation eines in der Flüssigkeit ursprünglich gelösten Feststoffs resultieren. Die Dosieranlagen für solche Medien weisen z. B. Behälter auf, die ein mechanisches Rührwerk enthalten, um ein Absetzen des Feststoffs zu mindern oder günstigstenfalls zu vermeiden. Mit den an die Behälter angeschlossenen Pumpen werden die Medien in der gewünschten (d. h. zu dosierenden) Menge in einen Vorlagebehälter (Dosiervorlage) gefördert und gegebenenfalls gemeinsam mit anderen Medien zum gewünschten Produkt konfektioniert. Bei den meisten herkömmlichen Anlagen erfolgt die Herstellung einer bestimmten Produktmischung sequenziell aus Einzeldosen, das heißt jede der zur Erzeugung einer bestimmten Produktmischung benötigten Einzelkomponenten wird nacheinander aus dem jeweiligen Behälter zudosiert. Bei diesen Anlagen bilden der Vorratsbehälter und die Dosiervorrichtung baulich eine Einheit.

Die bisherigen Dosiervorrichtungen weisen vielfältige Nachteile auf. So sind diese Vorrichtungen dadurch gekennzeichnet, dass sie offene Vorratsbehälter umfassen, die von außen befüllt werden müssen. Bei offenen Systemen besteht die Gefahr, dass die Medien in den Behältern eindicken, da Flüssigkeit verdunsten kann. Der nicht eindeutig zu quantifizierende Flüssigkeitsverlust wird bei der Dosierung nicht berücksichtigt. Dies führt aufgrund des mit der Zeit sich anreichernden Feststoffgehaltes des Mediums dazu, dass die Produkte bei gleicher Dosierung unterschiedliche Zusammensetzungen aufweisen. Im schlimmsten Fall werden die Medien so eingedickt, dass eine Pumpenförderung nicht mehr möglich ist und/oder die Rührwerksmechanik blockiert oder zerstört wird. Dies kann dazu führen, dass die gesamte betroffene Dosiereinheit (Behälter mit Rühreinrichtung, Leitungen, Pumpe) ausgetauscht werden muss.

Weitere Nachteile herkömmlicher Dosiervorrichtungen ergeben sich daraus, dass die Medien in den Dosierventilen häufig aufgrund der Anreicherung der flüssigen Medien im Behältersystem schneller eintrocknen und/oder diese verstopfen. Die Dosierventile funktionieren dann nicht zuverlässig, müssen aufwändig gereinigt und zudem häufig ersetzt werden.

Ein weiterer Nachteil der herkömmlichen, offenen Behältervorrichtungen ist es, dass aufgrund der Verderblichkeit, oder Veränderlichkeit der Dosiermedien unter dem Einfluss der Umgebungsluftexposition und der darin enthaltenen Mikroorganismen vielfach auf den Einsatz von Konservierungsmitteln nicht verzichtet werden kann.

Die CN 106563384 A beschreibt eine Sterilisationssprühvorrichtung für Emulsionsbehälter, speziell Lagerbehälter für Farbzusammensetzungen.

Auch in der Patentanmeldung DE 10 2017 011 283 A1 und dem Gebrauchsmuster DE 20 2017 007 501 U1 ist eine Vorrichtung und ein Verfahren beschrieben, das die zuvor beschriebenen Nachteile des Stands der Technik beheben soll. Beschrieben ist ein Behältersystem für flüssige Farbmittel, das eine Vorrichtung für die Einbringung mindestens eines flüssigen Mediums in einen Behälter des Systems umfasst. In einer speziellen Ausführung wird in die Behälter für die Farbmittel eine stabilisierend oder konservierend wirkende Zubereitungen appliziert, um eine Verkeimung der Farbmittel in den Behältern wirksam zu verhindern.

In der Praxis hat sich jedoch gezeigt, dass die Zuführung der konservierenden Zubereitungen noch verbesserungswürdig ist. Zum einen müssen die Vorratsbehälter per Hand in regelmäßigen Abständen nachgefüllt werden, zum andern besteht beim Nachfüllprozess die Gefahr, dass die Additive beim Umfüllvorgang kontaminiert werden oder Partikel (Staub) aus der Umgebungsluft in den Additivbehälter gelangen können. Das kann dazu führen, dass die Additiv-Zubereitungen an Wirksamkeit verlieren oder dass durch einen Fremdkörpereintrag die Sprühdüsen verstopfen können.

Zudem sind im Fall, dass Additive eingesetzt werden sollen, die als Gefahrstoff im Sinne der Gefahrstoffverordnung gelten, besondere Maßnahmen erforderlich, um die gesetzlichen Arbeitsschutzvorschriften zu erfüllen. Somit dürfen für diese Arbeiten nur durch speziell unterwiesene Personen ausgeführt werden. Zudem sind diese Prozesse im Arbeitsschutzkonzept des Betreibers zu dokumentieren und zu überwachen.

Weiterhin wurde gefunden, dass auch die Weiterentwicklung der in der Patentanmeldung DE 10 2017 011 283 A1 und dem Gebrauchsmuster DE 20 2017 007 501 U1 beschriebenen Erfindung gemäß der EP 3 702 320 A1 und der WO 2020094258 A1 noch verbesserungswürdig ist. So hat sich die Zuführung des Dosiermediums von der Basis der Behälterplatte oder als Drehtisch, auf dem sich die Verteilvorrichtung befindet, d.h. von unten, als unvorteilhaft für die Praxisanwendung dieser Vorrichtungen erwiesen. Nachteile sind eine verlängerte Leitungsstrecke und eine bauliche Behinderung der Dosiermaschinenbestückung mit Behältern, da die Leitungen das Ein- und Ausbauen der Behälter oder Reparaturen behindern.

Die zuvor geschilderten Probleme ergeben sich nicht nur beim Dosieren fließfähiger Anstrichzusammensetzungen, sondern auch in anderen Bereichen, wie dem Abfüllen von Getränken, Kosmetika, etc.

Der vorliegenden Erfindung liegt zum einen die Aufgabe zugrunde, eine Vorrichtung zur Verfügung zu stellen, wobei möglichst viele der beschriebenen Nachteile vermieden werden. Der Erfindung liegt weiterhin die Aufgabe zugrunde, einer Dosiervorichtung für flüssige Medien ein Additiv zuzuführen, dass einen Befall der Dosiervorrichtung und der darin befindlichen flüssigen Medien mit Mikroorganismen zu vermeiden. Dabei sollen möglichst nur solche Inhaltsstoffe zum Einsatz kommen, die als unbedenklich für die Gesundheit für Mensch und Tier und die Umwelt eingestuft sind. Es soll speziell eine Aufpegelung von Mikrobioziden in den in der Dosiervorrichtung befindlichen flüssigen Medien, auch bei wiederholter Anwendung, vermieden werden.

Überraschenderweise wurde nun gefunden, dass diese Aufgabe gelöst wird, wenn man in einer Vorrichtung zum Dosieren fließfähiger Zusammensetzungen eine Zuführvorrichtung in Form einer separaten Baugruppe vorsieht. Dabei hat es sich speziell als vorteilhaft erwiesen, wenn man für die zuzuführenden Additive ein Behältersystem vorsieht, das austauschbare Gebinde, wie z.B. kollabierbare Beutel oder Bag-in-box-System umfasst. Alternativ oder zusätzlich hat es sich als vorteilhaft erwiesen, wenn man als konservierendes Additiv eine Zusammensetzung vorsieht, die Wasserstoffperoxid oder eine Wasserstoffperoxidquelle enthält. Alternativ oder zusätzlich kann wenigstens ein Metallsalz und/oder ein kolloidal vorliegendes Metall, speziell wenigstens ein Silbersalz und/oder kolloidal vorliegendes Silber, eingesetzt werden. Besonders vorteilhaft ist die Kombination von Wasserstoffperoxid oder einer Wasserstoffperoxidquelle mit einer Phosphorverbindung als Chelatbildner. In diesem Falle kann eine unerwünschte Zersetzung des Wasserstoffperoxids in Anwesenheit von Metallen und Metallsalzen, speziell Silber und Silbersalzen vermieden werden.

Speziell mit der erfindungsgemäßen Zuführvorrichtung für flüssige Medien (additive Fluide) gelingt es, möglichst viele der beschriebenen zu beheben. Zum einen werden die flüssigen Medien (additive Fluide) nicht mehr durch Umfüllen in einen Behälter der Dosiervorrichtung in den Verarbeitungsprozess eingebracht, zum andern wird vermieden, dass Maschinenbediener mit Gefahrstoffen in Kontakt geraten. Weiterhin können keine unerwünschten Stoffe in den Verarbeitungsprozess gelangen. Zudem erlaubt die Zuführung im geschlossenen System eine gleichbleibende Produktqualität der Additive und erhöht die Lagerstabilität. Mit der zusätzlichen Installation eines Sensors kann der Füllstand des Behältersystems der Zuführvorrichtung überwacht werden. Eine Zuführpumpe kann über die Steuer/Rechnereinheit angesteuert werden und die Funktion der maschinenseitigen Dosierpumpe übernehmen. Die erfindungsgemäße Zuführvorrichtung ermöglicht die Zuführung auch von als Gefahrstoffen klassifizierten Additiven in einem sogenannten "geschlossenen System". Die Bereitstellung von Gefahrstoffen im geschlossenen System ist im Sinne der einschlägigen Arbeitsschutzgesetze eine technische Maßnahme nach DGUV (Richtlinien des Verbands "Deutsche Gesetzliche Unfallversicherung"). Geschlossene Systeme sind die wirksamsten aller technischen Schutzmaßnahmen. Die erfindungsgemäße Zuführvorrichtung ermöglicht die Automatisierung der Konservierung von Farbmittel innerhalb von Dosieranlagen, so genannten Dispensern. Für diese Form der Konservierung wird hier erstmals der Begriff der instrumentellen Konservierung verwendet. Die "Instrumentelle Konservierung" (kurz: IK) ist im Bereich der apparativen Verarbeitung verderblicher Medien die automatisierte Bereitstellung und Adaption von bioziden Wirkstoffen und Stabilisatoren oder die Herstellung von biozid wirkenden Milieus mit einer technischen Vorrichtung zur kontrollierten Konservierung ohne den Einsatz klassischer Konservierungsmittel.

Mit der erfindungsgemäßen Zuführvorrichtung in Form einer separaten Baugruppe werden zudem die zuvor genannten Nachteile der in der EP 3 702 320 A1 und der WO 2020094258 A1 beschriebenen Verfahren behoben. Speziell die Möglichkeit der Verteilung der Leitungszuführung, besonders bevorzugt über eine Drehverteilereinheit mit obenliegenden Leitungsführung, so dass sich diese nahezu auf einer Ebene im oberen Teil der Dosieranlage befindet und von oben erreichbar ist, erlauben eine ungehinderte Zugänglichkeit auf alle Maschinenteile. Zugleich werden der reguläre Reparatur- und Serviceaufwand der Maschine durch die erfindungsgemäße Zuführvorrichtung nicht beeinträchtigt. Die vorliegende Erfindung eignet sich somit auch zur Behebung der durch die konventionelle Anwendung des Sprühsystems nach Patentanmeldung DE 10 2017 011 283 und Gebrauchsmuster DE 20 2017 007 501 U1 entstehenden Nachteile hinsichtlich der Bereitstellung und der Zuführung der Additive.

Überaschenderweise wurde in Versuchen mit einer Sprühvorrichtung nach DE 10 2017 011 283 und EP 3 702 320 A1 mit einer Vernebelungsdüse zur Erzeugung eines nebelartigen polydispersen Aerosols mit Tropfendurchmessern von weniger als 100 µm (Mikrometer) nachteilige Effekte beobachtet. So wurden im näheren Umfeld der Anwendung innerhalb einer Dosiermaschine gelöste Komponenten der vernebelten Additive in der Umgebungsluft gemessen. Speziell beim Einsatz von desinfizierend wirken Stoffen kann dies zu erheblichen gesundheitlichen Risiken führen. Zur Erklärung wird vermutet, dass die Wirkstoffe oder das Fluid in disperser Form mit der Gasphase aus den Farbmittelbehältern austreten können, da diese Behälter nicht dicht abschlie-ßen. Die mit den beschriebenen Vorrichtungen erzielten Aerosole wiesen Tröpfchendurchmesser von zum Teil unter 10 µm bis 100 µm auf. Aufgrund der geringen Sinkgeschwindigkeit bzw. der langen Verweildauer der Tröpfchen in der dispersen Phase kann eine Wechselwirkung mit der gesättigten Luft im Kopfraum des Farbmittelbehälters stattfinden. Es wird vermutete, dass dabei das Aerosol einen sogenannten Stripping-Effekt erfahrenkann, wonach einzelne Stoffe oder Stoffgemische aus dem Sprühnebel in die Gasphase übergehen. Alternativ ist es denkbar, dass diese Stoffe oder Stoffgemische die Sprühbehälter als eine Art azeotropes Gemisch oder als Nebel selbst verlassen und in die Umgebungsluft gelangen. Es besteht somit die Gefahr, dass Desinfektionsmittel oder andere Additive nach einem Sprühvorgang in die Raumluft migrieren und eingeatmet werden können oder sich auf der Haut eines in der Nähe befindlichen Menschen absetzen könne. Das ist aus Sicht des betrieblichen Arbeitsschutzes bedenklich, da Desinfektions- oder Konservierungsmittel angewendet werden, um lebende Zellen in Form von Bakterien, Viren etc. abzutöten oder mindestens zu schädigen, und damit kollateral auch die Gesundheit des Menschen beeinträchtigt werden kann. Je nach Gefährdungspotential des austretenden Stoffes können etwa Reizungen oder sogar Verätzungen der Atemwege auftreten, es kann zu allergischen Reaktionen kommen. Im Extremfall könnte der intensive Kontakt mit einem Desinfektionsmittel krebserregend wirken und/oder zu einer Schädigung des Erbguts führen. Es besteht ein Bedarf an der Lösung des aktuell erkannten zuvor beschriebenen Problems.

### ZUSAMMENFASSUNG DER ERFINDUNG

Ein erster Gegenstand der Erfindung ist eine Vorrichtung zur Zuführung eines ersten flüssigen Mediums M1 in eine Dosiervorrichtung, in der wenigstens ein zweites flüssigen Medium M2 bevorratet und mit dieser dosiert wird, wobei die Zuführung in das zweite Medium M2 oder den darüber befindlichen und damit in direktem Kontakt stehenden Gasraum erfolgt, umfassend
- ein Behältersystem A), das wenigstens ein austauschbares Gebinde umfasst, das ein erstes flüssiges Medium M1 enthält,
- ein Leitungssystem zur Strömungsverbindung des Behältersystems A) mit der Dosiervorrichtung,
- eine in das Leitungssystem integrierte Fördervorrichtung.

Bevorzugt weist die Vorrichtung zusätzlich eine Verregnungsvorrichtung zur tropfenförmigen Zuführung des ersten flüssigen Mediums M1 in den über dem zweiten flüssigen Medium M2 befindlichen Gasraum auf.

Bevorzugt wird das erste flüssige Mediums M1 dem Gasraum mit einem mittleren Tropfendurchmesser, bestimmt als Sauterdurchmesser nach DIN ISO 9276-2:2018-09, von 250 bis 1500 µm, bevorzugt von 300 bis 1200 µm, zugeführt.

Bevorzugt wird das erste flüssige Mediums M1 dem Gasraum tropfenförmig mit einer monodispersen Tropfenverteilung zugeführt.

Bevorzugt umfasst das Behältersystem A) wenigstens ein austauschbares Gebinde, das ausgewählt ist unter kollabierbaren Beutel, Bag-in-box-Systemen und Kombinationen davon. Insbesondere umfasst das Behältersystem A) als austauschbares Gebinde wenigstens einen kollabierbaren Beutel.

Bevorzugt ist in das Leitungssystem wenigstens ein Füllstandsensor für das Behältersystem A) integriert. Insbesondere ist in das Leitungssystem wenigstens ein Unterdrucksensor, integriert.

Bevorzugt ist in das Leitungssystem wenigstens ein Filter integriert. Somit kann der Eintrag von festen, nicht dispergiert vorliegenden Komponenten in die Dosiervorrichtung vermieden werden. In einer speziellen Ausführungsform wird ein Feinfilter eingesetzt, der Teilchen von größer als 1 mm, speziell Teilchen von größer als 0,1 mm zurückhält.

Bevorzugt umfasst die Dosiervorrichtung einen oder mehrere (z.B. 2, 3, 4, 5 oder mehr als 5, wie etwa bis zu 50 Behälter B). Die Behälter B) dienen zur Lagerung und bedarfsgemäßer Entnahme wenigstens eines flüssigen Mediums M2. Verschiedene Behälter M2 können jeweils gleiche oder verschiedene flüssige Medien M2 enthalten.

In einer bevorzugten Ausführungsform handelt es sich bei der Dosiervorrichtung, der das erste flüssige Medium M1 zugeführt wird, um eine Vorrichtung zum Abfüllen und/oder Dosieren von Farbstoffzusammensetzungen (Farbmitteldosieranlage).

Eine spezielle Ausführungsform ist eine Farbmitteldosieranlagen, die einen bis 36 Behälter B) umfasst, die als flüssiges Medium M2 jeweils gleiche oder verschiedene Farbmittel enthalten. Verschiedene Farbmittel unterscheiden sich vorzugsweise in wenigstens einer Eigenschaft, ausgewählt unter Farbton, Helligkeit und Farbstärke.

Die erfindungsgemäße Zuführvorrichtung verfügt über ein Leitungssystem um eine Strömungsverbindung zwischen dem Behältersystem A) mit der Dosiervorrichtung herzustellen. Die Anbindung kann über übliche Anschlüsse erfolgen, die z.B. unabhängig voneinander ausgewählt sind unter Dreh-, Steck-, Klemm-, Schraub-Verbindungen und beliebigen Kombinationen daraus.

In einer speziellen Ausführungsform umfasst die Dosiervorrichtung einen oder mehrere Behälter B) und verbindet das Leitungssystem das Behältersystem A) der Zuführvorrichtung entweder direkt oder über eine Verteilereinheit mit wenigstens einem Behälter B) der Dosiervorrichtung.

In einer speziellen Ausführungsform weist/weisen der/die Behälter B) eine Deckelkonstruktion auf, über die der/die Behälter B) mit wenigstens einem flüssigen Medium M2 befüllt werden kann/können.

In einer speziellen Ausführungsform mündet das Leitungssystem, das das Behältersystems A) mit wenigstens einem Behälter B) verbindet im oberen Bereich des Behälters B). Vorzugsweise mündet das Leitungssystem, das das Behältersystems A) mit wenigstens einem Behälter B) verbindet im Gasraum oberhalb der maximalen Füllhöhe des flüssigen Mediums M2.

In einer speziellen Ausführungsform mündet das Leitungssystem, das das Behältersystems A) mit wenigstens einem Behälter B) verbindet im Bereich der Deckelkonstruktion des Behälters B) und wird das erste flüssige Medium M1 dem Behälter B) in Form von Tropfen, insbesondere als Aerosol, zugeführt.

Bevorzugt ist das Medium M1 ausgewählt ist unter Lösungs- oder Dispergiermitteln, Mitteln, die einer Verkeimung entgegenwirken, davon verschiedenen Additiven und Mischungen davon.

In einer speziellen Ausführungsform enthält das Medium M1 wenigstens eine Komponente, ausgewählt unter
- reaktiven Sauerstoffspezies, insbesondere Wasserstoffperoxid und/oder wenigstens einer Wasserstoffperoxidquelle,
- Metallsalzen und/oder kolloidal vorliegenden Metallen, speziell Silbersalzen und/oder kolloidal vorliegendem Silber,
- Phosphorverbindungen, insbesondere Phosphorsäure, Oligo- und Polyphosphorsäuren, phosphoriger Säure und den Salzen und Estern davon,
- Chlorverbindungen, insbesondere Natriumhypochlorit,
- Wasser,
- Mischungen davon.

In einer speziellen Ausführungsform werden die flüssigen Medien M2 in den Behältern B) durch Rührvorrichtungen und/oder durch Umwälzen homogenisiert.

Ein weiterer Gegenstand der Erfindung ist ein Verfahren zur Zuführung eines ersten flüssigen Mediums M1 in eine Dosiervorrichtung, in der wenigstens ein zweites flüssigen Medium M2 bevorratet und mit dieser dosiert wird, wobei die Zuführung in das zweite Medium M2 oder den darüber befindlichen und damit in direktem Kontakt stehenden Gasraum erfolgt, wobei die Zuführung mit einer Vorrichtung erfolgt, wie zuvor und im Folgenden definiert. Bevorzugt wird das erste flüssige Mediums M1 dem Gasraum mit einem mittleren Partikeldurchmesser, bestimmt als Sauterdurchmesser nach DIN ISO 9276-2:2018-09, von 250 bis 1500 µm, bevorzugt von 300 bis 1200 µm, zugeführt. Bevorzugt wird das erste flüssige Mediums M1 dem Gasraum tropfenförmig mit einer monodispersen Tropfenverteilung zugeführt.

Ein weiterer Gegenstand der Erfindung ist die Verwendung einer Dosiervorrichtung mit einer Zuführvorrichtung, wie zuvor und im Folgenden definiert, zur Verlängerung der maximalen Standzeit wenigstens eines flüssigen Mediums M2 in der Dosiervorrichtung.

Ein weiterer Gegenstand der Erfindung ist die Verwendung einer Dosiervorrichtung mit einer Zuführvorrichtung, wie zuvor und im Folgenden definiert, zum Abfüllen und/oder Dosieren von Farbstoffzusammensetzungen, insbesondere zum Abfüllen und/oder Dosieren von pigmenthaltigen Farbstoffzusammensetzungen.

In einer speziellen Ausführungsform umfasst die erfindungsgemäße Dosiervorrichtung mit Zuführvorrichtung eine elektronische Steuerung und eine Computeranbindung mit Dosiersoftware.

Ein weiterer Gegenstand der Erfindung ist ein Desinfektions- und Konservierungsmittel für eine Farbstoffzusammensetzung, enthaltend
a) wenigstens eine Komponente, ausgewählt unter
   a1) wenigstens einer reaktiven Sauerstoffspezies,
   a2) wenigstens einem Metallsalz und/oder einem kolloidal vorliegenden Metall, und Mischungen enthaltend wenigstens eine Komponente a1) und wenigstens eine Komponente a2),
b) gegebenenfalls wenigstens eine Phosphorverbindung, ausgewählt unter Phosphorsäure und den Salzen und Estern davon, Oligo- und Polyphosphorsäuren und den Salzen davon, phosphoriger Säure und den Salzen und Estern davon,
c) gegebenenfalls wenigstens eine Chlorverbindung, insbesondere Natriumhypochlorit, und
d) Wasser,
mit der Maßgabe, dass wenn die Zusammensetzung wenigstens eine Komponente a1) und wenigstens eine Komponente a2) enthält, diese auch wenigstens eine Phosphorverbindung b) enthält.

Eine spezielle Ausführungsform ist ein Konservierungsmittel für eine Farbstoffzusammensetzung, enthaltend Wasserstoffperoxid in einer Menge von 0,05 bis 50 Gew.-%, bevorzugt 0,1 bis 30 Gew.-%, bevorzugter 0,5 bis 10 Gew.-%, bezogen auf das Gesamtgewicht des Konservierungsmittels.

Ein weiterer Gegenstand der Erfindung ist Verwendung einer Zusammensetzung, enthaltend
a) wenigstens eine Komponente, ausgewählt unter
   a1) wenigstens einer reaktiven Sauerstoffspezies,
   a2) wenigstens einem Metallsalz und/oder einem kolloidal vorliegenden Metall, und Mischungen enthaltend wenigstens eine Komponente a1) und wenigstens eine Komponente a2),
b) gegebenenfalls wenigstens eine Phosphorverbindung, ausgewählt unter Phosphorsäure und den Salzen und Estern davon, Oligo- und Polyphosphorsäuren und den Salzen davon, phosphoriger Säure und den Salzen und Estern davon,
c) gegebenenfalls wenigstens eine Chlorverbindung, insbesondere Natriumhypochlorit, und
d) Wasser,

mit der Maßgabe, dass wenn die Zusammensetzung wenigstens eine Komponente a1) und wenigstens eine Komponente a2) enthält, diese auch wenigstens eine Phosphorverbindung b) enthält,
zur Behandlung einer Vorrichtung zum Abfüllen und/oder Dosieren von Farbstoffzusammensetzungen, um einer Verkeimung entgegenzuwirken.

Bevorzugt ist die reaktive Sauerstoffspezies a1) ausgewählt unter Wasserstoffperoxid und/oder wenigstens einer Wasserstoffperoxidquelle. Geeignete Wasserstoffperoxidquellen sind Peroxiverbindungen, wie Perborate, Percarbonate, etc.

Bevorzugt ist die Komponente a2) ausgewählt unter Silbersalzen und/oder kolloidal vorliegendem Silber.

Eine bevorzugte Phosphorverbindung b) ist Tetranatriumdiphosphat (Natriumpyrophosphat).

Eine bevorzugte Chlorverbindung c) ist Natriumhypochlorit, bevorzugt als wässrige Lösung.

### BESCHREIBUNG DER ERFINDUNG

Ein erster Aspekt der Erfindung betrifft die Vermeidung der Nachteile, die mit dem Eintrag von flüssigen Medien als Additiven verbunden sind, wenn diese Zuführung in Form eines nebelartigen polydispersen Aerosols mit geringen Tropfendurchmessern von z.B. weniger als 100 µm (Mikrometer) erfolgt. Es wurde gefunden, dass dieses Problem gelöst werden kann, wenn zur Zuführung und Verteilung des Additivs eine Feinverregnung und nicht eine Vernebelung ausgewählt und technisch umgesetzt wird.

Zur Beschreibung der Tropfendimension wird im Rahmen der Anmeldung der sogenannte Sauterdurchmesser angewendet. Der Sauterdurchmesser ist eine Kenngröße einer Partikelgrößenverteilung in einem Medium. Unter der Annahme, dass das gesamte Volumen der Partikel eines Aerosols in gleich große Kugeln umgeformt wird, deren Volumen- zu Oberflächenverhältnis wiedergegeben werden soll, so hätten diese Kugeln den Sauterdurchmesser. Die Bestimmung des Sauterdurchmessers kann nach DIN ISO 9276-2:2018-09 erfolgen (Darstellung der Ergebnisse von Partikelgrößenanalysen - Teil 2: Berechnung von mittleren Partikelgrößen/-durchmessern und Momenten aus Partikelgrößenverteilungen).

Nach einer allgemeingültigen Klassifizierung können Tropfengrößen nach dem Sauterdurchmesser folgendermaßen kategorisiert werden:
>10 µm: Ultrafeine Zerstäubung / Trockennebel
>100 µm: Feine Zerstäubung / feiner Nebel
>300 µm: Halbfeine Zerstäubung / feiner Sprühnebel
>1000 µm: Halbgrobe Zerstäubung / leichter Regen

Als ideale Tropfengröße für die Verregnungstechnik in Abgrenzung zur Spray-/Verneblungstechnik eines Aerosols zur Anwendung als Feinverteilung eines Fluids innerhalb eines Dispensers zur Einbringung in einen Vorratsbehälter für Farbmittel wurde nun eine Tropfengröße im Bereich von wenigstens 250 µm bis höchstens 1500 µm gefunden.

Bevorzugt wird somit das erste flüssige Mediums M1 dem Gasraum mit einem mittleren Tropfendurchmesser, bestimmt als Sauterdurchmesser nach DIN ISO 9276-2:2018-09, von 250 bis 1500 µm, bevorzugt von 300 bis 1200 µm, zugeführt.

Bevorzugt wird das erste flüssige Mediums M1 dem Gasraum tropfenförmig mit einer monodispersen Tropfenverteilung zugeführt. Der Begriff "monodispers" wird im Rahmen dieser Anmeldung in einem technischen Sinn und nicht in einem mathematischen Sinn verstanden und bedeutet, dass die Tropfen im Wesentlichen gleich groß sind, also keine breite Tropfenverteilung aufweisen. "Monodispers" im mathematischen Sinn ist ein Partikelkollektiv mit der Verteilungsbreite Null, alle anderen Partikelkollektive sind demgegenüber "polydispers". In der Realität gibt es jedoch keine mathematisch monodispersen Partikelkollektive. Im Rahmen der Erfindung wird eine Tropfenverteilung als "monodispers" bezeichnet, deren mittlere Tropfendurchmesser weniger als 25%, bevorzugt weniger als 20%, insbesondere weniger als 10 % voneinander abweichen. Im Rahmen der Erfindung wird weiterhin eine Tropfenverteilung als "monodispers" bezeichnet, die nur ein Maximum der Tropfenverteilung aufweist, oder wobei, bezogen auf den Tropfendurchmesser, wenigstens 75 % der Tropfen, bevorzugt wenigstens als 80% der Tropfen, insbesondere wenigstens 90 % der Tropfen einem Maximum zugeordnet werden können. Die Bestimmung der Tropfendurchmesser kann dabei, wie zuvor beschrieben, als Sauterdurchmesser nach DIN ISO 9276-2:2018-09 erfolgen.

Das Verfahren der Mikrofeinverregnung im Sinne der Erfindung erzeugt annähernd monodisperse Aerosole mit einer engen Tropfengrößenverteilung. Tropfengrößen kleiner als 100 µm lassen sich damit vermeiden oder auszuschließen. Auch eine Überschreitung der Tropfendurchmesser von 1500 µm, speziell 1200 µm, kann somit vermieden werden. Dabei ist eine Unterschreitung des minimalen Tropfendurchmessers kritischer zu bewerten als eine Überschreitung des maximalen Tropfendurchmessers.

Die Tropfendurchmesser innerhalb eines Sprühnebels, der nach herkömmlichen Verfahren des Standes der Technik erzeugt wird, sind mit wenigen hundertstel Millimetern wesentlich geringer als die einer im folgenden beschriebenen erfindungsgemäßen Feinverregnung, sie schwanken zudem stark zwischen den einzelnen Tropfen (polydisperser Spray). Dabei bestimmt die Tropfengröße wesentlich, ob ein Sprühnebel nässend ist oder nicht. Ist er leicht nässend, so handelt es sich in der Regel um eine Tropfengröße, die im Mittel 10 bis 20 µm nicht überschreitet, bei dichtem Nebel sind es eher 20 µm bis 40 µm. Nebel dieser Tropfengröße sind von bisherigen Verfahren bekannt, die als Spray-Zerstäubung oder Vernebelung beschriebenen sind und angewendet werden.

Bevorzugt wird in der erfindungsgemäßen Vorrichtung zur Zuführung eines ersten flüssigen Mediums M1 in eine Dosiervorrichtung und in dem erfindungsgemäßen Verfahren wenigstens eine Einstoff-Druckdüse eingesetzt. Bevorzugt weist die Einstoff-Druckdüse eine Düsenweite im Bereich von 0,1 mm bis 0,4 mm auf. Bevorzugt beträgt der Zufuhrdruck wenigstens 1 bar, besonders bevorzugt wenigstens 1,1 bar. Somit lassen sich die gewünschten Tropfendurchmesser, speziell von wenigstens 300 µm bis höchstens 1200 µm, erreichen.

Mit der Wahl entsprechender Düsenweiten und Zufuhrdrücken können die Tropfengrö-ßen beeinflusst werden.

Ein ideale Feinverregnung besteht nur oder ganz überwiegend aus Tropfen mit gleich großem Durchmesser (monodisperses Aerosol). Zum Messen realer Tropfengrößenverteilungen an Düsen können laseroptische Methoden angewendet werden. Diese Methoden arbeiten berührungs- und beeinflussungsfrei.

Mit der Wahl von geeigneten (Verregnungs-)Düsenmündungsdurchmessern und der Anpassung des Zufuhrdrucks, speziell in einem Bereich von 1 bar bis 30 bar, kann zudem die Mündungsgeometrie angepasst werden. Mit einer Anpassung der Verregnungswinkel und -weiten wird sowohl die Benetzung des gesamten Kopfraums und der Oberfläche der zweiten flüssigen Medien M2 (in einer speziellen Ausführung Farbmittel), als auch der Rührelemente des Farbmittelbehälters möglich. Eine Steuerung der Intensität ist neben der Düsengeometrie, der Anzahl der Düsen und des Zufuhrdrucks auch über die Dauer der Verregnung möglich.

Als Material für geeignete Verregnungsdüsen kommen alle handelsüblichen Werkstoffe, Industriekunststoffe, Keramiken Glas oder Materialkombinationen in Betracht. Als besonders bevorzugt im Hinblick auf die verwendeten Additive hat sich Edelstahl und brüniertes (geschwärztes) Messing erwiesen.

Mit der vorliegenden Erfindung werden die mit der Anwendung nach DE 10 2017 011 283 und EP 3 702 320 A1 entstehenden Nachteile hinsichtlich der Migration von Luftschadstoffen aus der Zuführ- und Dosiervorrichtung vermieden.

Unter einem flüssigen Medium wird im Rahmen der vorliegenden Erfindung ganz allgemein ein Medium verstanden, das wenigstens eine flüssige Phase oder eine Kombination aus wenigstens einer flüssigen und wenigstens einer teilchenförmigen Phase aufweist. Speziell handelt es sich bei dem flüssigen Medium um eine ein- oder mehrphasige Flüssigkeit. Beispiele für flüssige Medien sind Lösungen, Emulsionen (zwei- und mehrphasige Flüssigkeiten), Suspensionen, Dispersionen und andere flüssige Medien. Ein flüssiges Medium kann Feststoffteilchen enthalten oder es kann potentiell die Möglichkeit bestehen, dass sich in ihm Feststoffteilchen ausbilden. Dazu zählen z. B. Suspensionen, d. h. Dispersionen von unlöslichen Feststoffteilchen in Flüssigkeiten, aber auch teilerstarrte Schmelzen oder flüssige Medien mit Feststoffteilchen, die aus dem Auskristallisieren eines in der Flüssigkeit ursprünglich gelösten Feststoffs resultieren.

In einer speziellen Ausführungsform kann das flüssige Medium, speziell wenigstens eines der flüssigen Medien M2, absetzgefährdet sein, d. h. zur Ausbildung eines festen Bodensatzes neigen.

Insbesondere handelt es sich bei dem flüssigen Medium M2 um eine Farbstoffzusammensetzung. Die Viskosität flüssiger Medien kann in einem weiten Bereich variieren, der von leichtflüssig bis zähflüssig/pastös reicht.

Eine gebräuchliche Methode zur Bestimmung der Viskosität für ein absetzgefährdetes Fluid ist z. B. die Bestimmung mittels Rotationsviskosimeter entsprechend DIN 53 019.

In einer speziellen Ausführung handelt es sich bei den flüssigen Medien M1 und M2 um eine wässrige Zusammensetzung. Im Rahmen der Erfindung wird unter einer wässrigen Zusammensetzung eine Zusammensetzung verstanden, die bezogen auf das Gesamtgewicht der bei Normalbedingungen (20°C, 1013,25 mbar) flüssigen Komponenten (d.h. bei Lösungen bezogen auf die Gesamtmenge an Lösungsmitteln und bei flüssigen Medien, die Feststoffteilchen enthalten, bezogen auf die Gesamtmenge an Suspendiermittel) wenigstens 50 Gew.-% Wasser, bevorzugt wenigstens 75 Gew.-% Wasser, insbesondere wenigstens 90 Gew.-% Wasser, speziell wenigstens 95 Gew.-% Wasser, spezieller wenigstens 99 Gew.-% Wasser enthalten. Das flüssige Medium kann zusätzlich zu Wasser wenigstens ein organisches Lösungsmittel enthalten. Bevorzugt sind die organischen Lösungsmittel teilweise oder vollständig mit Wasser mischbar.

Eine Dosiervorrichtung, in der wenigstens ein zweites flüssigen Medium M2 bevorratet und mit dieser dosiert wird, umfasst vorzugsweise wenigstens ein Behältersystem B), das ein zu dosierendes flüssiges Medium M2 enthält. Dabei handelt es sich insbesondere um eine Vorrichtung zum Dosieren und Mischen eines Produkts aus zwei oder mehr Komponenten.

Unter einem Behälter wird im Sinne dieser Anmeldung ein Packmittel verstanden, das dazu geeignet ist, ein flüssiges Medium zu umhüllen oder zusammenzuhalten. Der Behälter kann dabei vollständig oder teilweise formstabil oder auch kollabierbar sein. Als erfindungsgemäße Behälter, speziell für das Behältersystem A), sind bevorzugt geschlossene Systeme geeignet. Besonders bevorzugt sind Behälter in der Ausführung als kollabierbare Beutel mit mindestens einem Anschluss für ein Leitungssystem. Geeignete Behältersysteme sind in der Technik unter anderem als Bag-in-Box-Systeme (BiB) oder Bladderbox Canister (BBC) mit einer Konnektierung zum Auslass des Inhalts bekannt. Die Behälter können zur mechanischen Stabilisierung mit einem umgebenden, formstabilen Gehäuse oder Container umgeben sein. Diese sind bevorzugt aus Kartonagenmaterial ausgeführt. Geeignet sind jedoch auch andere formstabile Materialien, z.B. aus Kunststoffen, Metall Glas, etc. Die Ausgangsöffnungen der Behälter sind mit einer Schnellkupplung versehen, sodass die Konnektierung durch Aufstecken oder Lösen sehr einfach erfolgen kann, ohne dass der Behälterinhalt in Kontakt mit der Außenluft oder dem Bediener gelangen kann. Die Konnektoren sind bevorzugt mit beidseitig selbstschließenden Ventilen versehen, sodass weder Material austreten kann noch Umgebungsluft eingetragen wird. Eine Förderpumpe kann nach dem Herstellen der Verbindung die Additive direkt der Dosiervorrichtung oder zunächst einem Verteilersystem zuführen. Um die Dosiervorrichtung, insbesondere die Einspritzdüsen der Farbmittelbehälter, vor Blockaden zu schützen sind vorzugsweise in das Leitungssystem saug- und/ oder druckseitig Filter, speziell Feinfilter, eingebunden, die zum einfachen Austausch mit Klemmring- oder anderen Schnellkupplungen versehen sein können. Die Strömungsverbindung zwischen Behältersystem A) und Dosiervorrichtung enthält in einer weiteren bevorzugten Ausführungsform einen Sensor, der die Restentleerung des wenigstens einen Gebindes A) oder einen festgelegten Schwellenwert erfasst. Diese Sensoren können als mechanische Zähler, induktive Zähler, oder Strömungs- oder Druck- /Unterdrucksensoren ausgeführt sein. Bevorzugt sin Unterdrucksensoren. Die Zählerwerte werden elektronisch überwacht und im Steuerungssystem der Maschine erfasst und verarbeitet. Beim Erreichen eines festgelegten Werts oder Druckzustands wird eine Zustandsmeldung ausgegeben. Diese wird bevorzugt am Steuerungssystem der Maschine ausgegeben und auf einer Ausgabeeinheit als optisches oder akustisches Signal angezeigt. So erhält der Bediener die Information, wann ein Gebinde gewechselt werden muss oder dass ein Gebinde direkt getauscht werden muss. Zusätzlich können quantitative Füllstandinformationen auf einem Display-/Monitor angezeigt werden. Zur statistischen Erfassung können die Verbrauchsinformationen und Wechselintervalle elektronisch gespeichert werden, oder zur automatisierten Nachbestellung der Additive verarbeitet werden.

Anstelle der kollabierbaren Beutel können alternativ auch starre Ein- oder Mehrwegbehälter, beispielsweise mit einem durchstechbaren Verschluss (Septum) oder einem Verschluss mit Druckausgleichsmöglichkeit, als Gebinde zur Zuführung der flüssigen Medien M1 (fluide Additive) verwendet werden. Dabei wird dem Behälter bei der Entnahme über ein Ventil oder eine Öffnung Luft zum Druckausgleich zugeführt. Ähnliche Behälter sind in der Medizintechnik bekannt.

Die flüssigen Medien M1 enthalten vorzugsweise wenigstens ein Additiv, speziell wenigstens einen Wirkstoff oder eine Wirkstoffkombination. Speziell handelt es sich um Konservierungsstoffe im Sinne von Substanzen mit einer die Verkeimung verhindernden Wirkung sind. Formulierungen mit desinfizierender oder konservierender Wirkung, insbesondere solche, die sich in den zu dosierenden flüssigen Medien M2 nicht anreichern, können nach der Beschreibung in der DE 10 2017 011 283 und dem Gebrauchsmuster DE 20 2017 007501 U1 zur Anwendung kommen. Bevorzugt ist die einmalige oder wiederholte Zuführung zu einer Dosieranlage mit einem Sprühsystem nach der DE 10 2017 011 283 oder dem Gebrauchsmuster DE 20 2017 007501 U1. Dabei können handelsübliche Formulierungen zur Desinfektion oder Konservierung eingesetzt werden.

Konservierungsstoffe und Substanzen mit konservierender Wirkung sollen die Haltbarkeit von verderblichen Produkten verlängern, indem sie das Wachstum von Mikroorganismen wie Schimmelpilze, Fäulnis- und Gärungserreger verhindern. Giftstoffe, die von Pilzen produziert werden, können ernste Gesundheitsrisiken verursachen. Besonders Schimmelpilze können krebserzeugend, nerven-, nieren- oder lebertoxisch wirken, Missbildungen hervorrufen und das Immunsystem schwächen.

Als flüssiges Medium M1 (fluide Additive) eignen sich prinzipiell alle kommerziellen Zuschlagsstoffe mit konservierender Wirkung. Bevorzugt sind Standardkonservierungsmittel für Wirkstoff-Kombination, entsprechend der Positivliste Anhang 1 der RAL-UZ 102. Dazu zählen: Titandioxid/Silberchlorid; 2-Methyl-2(H)-isothiazol-3-on/1,2-Benzisothiazol-3(2H)-on im Verhältnis 1:1; 5-Chlor-2-methyl-4-isothiazolin-3-on / 2-Methyl-4-isothiazolin-3-on im Verhältnis 3:1; 3-Jod-2-propinyl-butylcarbamat; 1,2- Benzisothiazol-3(2H)-on; 2-Brom-2-nitropropan-1,3-diol (BNPD); BNPD1) + CIT/MIT (3:1); MIT/BIT (1:1) + CIT/MIT (3:1); 1,2-Dibrom-2,4-dicyanbutan (DBDCB); BIT+ CIT/MIT (3:1) ; BNPD + MIT/BIT (1:1); Zinkpyrithion (ZNP) + BIT4); Zinkpyrithion (ZNP) + MIT/BIT (1:2 bis 1:1); BNPD + BIT; Natriumpyrithion (NaP) + BIT; MIT/BIT2 (1:1) + Silberchlorid.

Weiterhin als flüssiges Medium M1 geeignet sind Benzoe- und Sorbinsäure und deren Ester, Sulfite etc., sowie Antioxidations- und Säuerungsmittel und eine Kombination mit klassischen als Topfkonservierungsmittel wirkungsvollen Wirkstoffzusammensetzungen.

Bevorzugte Alternativen zur klassischen Topfkonservierung sind die bekannten desinfizierenden Oxidationsmittel, insbesondere reaktive Sauerstoffspezies (ROS), in handelsüblichen Präparaten oder nach produktspezifischer Rezeptur. Zu den ROS gehören zum einen Radikale, wie das Hyperoxid-Anion (alte Bezeichnung: Superoxid-Anion) O2·⁻, das Hydroxyl-Radikal HO., das Peroxylradikal ROO. und das Alkoxylradikal RO., zum anderen stabile molekulare Oxidantien wie Wasserstoffperoxid H₂O₂, Hydroperoxid ROOH, Ozon Os, das Hypochlorit-Anion OCI- sowie angeregte Sauerstoffmoleküle (Singulett-Sauerstoff ¹O₂).

Reaktive Sauerstoffspezies sind Sauerstoffatome und chemisch aktive Moleküle, die Sauerstoff im Grund- oder angeregten Zustand enthalten, sowie deren Ionen. Sie greifen alle organischen Moleküle lebender Organismen an. Vor allem aber zerstören sie Bakterienkapseln und Zellwände. Wasserstoffperoxid (H₂O₂) ist ebenfalls sehr reaktiv und als flüssiges Medium M1 bevorzugt. Ozon (Os) ist ein stabiles, langlebiges Molekül, das als starkes Oxidationsmittel bekannt ist. Es zerstört ebenfalls die Zellwände und wird unter anderem beim Zerfall von Wasserstoffperoxid freigesetzt.

Bei der Desinfektion mit Metallionen und kolloidalen Metallen sind Silberionen und kolloidales Silber hervorragend verwendbar. Kupferionen und kolloidale Kupfer sind ebenfalls geeignet, aber nicht bevorzugt. Eine Kombination von Metallionen oder kolloidalen Metallen, insbesondere Silberionen oder vorzugsweise kolloidalem Silber in mit einer ROS, insbesondere H₂O₂, in wässriger Lösung kann eine hochwirksame Desinfektion bewirken. Beim Einsatz einer Kombination von ROS mit Metallsalzen ist vorzugsweise ein Chelatbildner, speziell ein phosphorhaltiger Chelatbildner, wie Natriumpyrophosphat zugegen. Durch wiederholte Desinfektion der Farbmittelbehälter einer Dosieranlage mit Sprüh-Vorrichtungen werden zuverlässig konservierende Bedingungen ohne den Einsatz von klassischen Topfkonservierungsmitteln erreicht.

Besonders bevorzugt sind Präparate aus einer Kombination von ROS auf Wasserstoffperoxid-Basis, Metallionen und als Stabilisatoren Phosphorsäure und deren Salze, phosphorige Säure und deren Salze, speziell Tetranatriumdiphosphat, in wässriger Lösung.

In der wissenschaftlichen Literatur und der Patentliteratur sind Anwendungen mit Oxidationsmitteln, im Besonderen Wasserstoffperoxid-haltige Präparate bekannt. Zur Anwendung mit organischen als auch mineralischen Farbmitteln wurde entgegen der Erwartung überraschenderweise herausgefunden, dass sich Rezepturen mit Wasserstoffperoxid als ROS-Quelle dann besonders eignen, wenn mindestens ein katalytisches Element vorzugsweise ein Metallion, besonders bevorzugt Silber enthalten ist. Solche Zusammensetzungen sind als handelsüblicher Produkte erhältlich. Zur Stabilisierung hat sich Tetranatriumdiphosphat (Na₄P₂O₇, auch als Natriumpyrophosphat bekannt) als besonders vorteilhaft erwiesen. Einerseits sind diese Zubereitungen sehr lagerstabil, bewirken nach der Zuführung der Mischung zu den Farbmitteln eine gleichmäßige Freisetzung von antimikrobiell wirksamen ROS und schützen gleichzeitig die Pigmente der Farbmittel. ROS können ohne entsprechende Formulierung zur Farbveränderung von Pigmenten führen.

Der Einsatz von Tetranatriumdiphosphat in Anstrichmitteln ist hinsichtlich seiner Bedeutung als Gefahrstoff unkritisch, da Tetranatriumdiphosphat ist als Lebensmittelzusatzstoff zugelassen ist (Bezeichnung E 450c) bezeichnet. Zur Anwendung mit wässrigen Farbmitteln hat sich die Verwendung von Tetranatriumdiphosphat überraschend als besonders vorteilhaft erwiesen, insbesondere beim Einsatz in Farbmittelzubereitungen mit neutralen bis stark alkalischen pH-Werten, d.h. Zubereitungen mit pH-Werten >10. Sie lassen sich vorteilhaft mit einem Sprühsystem nach DE 10 2017 011 283 und Gebrauchsmuster DE 20 2017 007501 U1 einbringen. Hier werden durch die katalytische Zersetzungsreaktion der OH- Ionen naszierende ROS freigesetzt, was zu einer effektiven Desinfektion der gesamten mit Farbmittel benetzten Oberfläche eines Dosieranlagenbehälters (Behälters B)) führt.

Eine besonders bevorzugte Ausführungsform ist der Einsatz von Natriumhypochlorit als Desinfektionslösung (Additiv). Als stabilisierte Lösung ist Natriumhypochlorit handelsüblich verfügbar. Die Zielkonzentration für die in den Dosieranlagenbehälter enthaltenen wässrigen flüssigen Medien entspricht in etwa den Konzentrationen im Wasser der Bäder von Badeanstalten und Pools. Die Anwendung von Natriumhypochlorit ist prozesssicher und über Jahrzehnte im Bäderbetrieb nachgewiesen wirkungsvoll. Dabei werden im Prinzip die wässrigen fließfähigen Zubereitungen entsprechend der Wasserqualität im Bäderbetrieb eingestellt (konditioniert). Dabei hat sich überraschenderweise herausgestellt, dass die Pufferung der fließfähigen Medien auf einen pH im Bereich von 10 bis 10,5 besonders vorteilhaft hinsichtlich der Wirkungsdauer ist. Mit einer Anpassung des pH konnten die Dosierintervalle reduziert werden.

Mit der Anwendung von desinfizierend wirkenden Zubereitungen in herkömmlichen Farbmittel-Dosieranlagen wurde herausgefunden, dass besonders Oxidationsmittel teils zum schnellen Zerfall neigen. So werden etwa nach dem Befüllen der konventionellen, offenen Vorratsbehälter einer Dosieranlage mit oxidativen Zubereitungen durch Verunreinigungen der Behälter oder den Eintrag von Staub oder Kontakt mit der Umgebungsluft Zerfallsreaktionen ausgelöst. Das hat zur Folge, dass der Wirkstoff der Zubereitung im Vorlagebehälter zerfällt, bevor er als Wirkstoff in die Farbmittelbehälter appliziert wird. Mit der Anwendung der erfindungsgemäßen Zuführvorrichtung werden diese Zerfalls- oder Veränderungsprozesse wirkungsvoll verhindert. Zudem ermöglicht die Abfüllung der antimikrobiellen Rezepturen unter kontrollierten, sterilen Fertigungsbedingungen eine zuverlässig gleichbleibende, stabile Produktqualität bis zum Zeitpunkt der Verarbeitung innerhalb des Dosiersystems.

Gegenstand dieser Erfindung ist daher auch ein Verfahren zum Einsatz von wirkungsvollen Desinfektions-, und speziell alternativen (d.h. Mensch, Tier und Umwelt nicht gefährdenden) Konservierungsmitteln sowie die entsprechenden Rezepturen und deren Verwendung in einer Kombination aus Zuführvorrichtung und Dosieranlage. Besonders bevorzugt sind, wie beschrieben, Zubereitungen auf Basis von Reaktiven Sauerstoffspezies. Der Vorteil des erfindungsgemäßen Verfahrens ist, dass die Zubereitungen unter besonderen, kontrollierten Reinheitsbedingungen hergestellt und abgefüllt werden können, und nicht vor Ort manuell umgefüllt werden müssen. Das erlaubt eine gleichbleibend hohe Produktqualität. Bei konventionellen manuellen Umfüllvorgängen besteht die Gefahr der Verunreinigung, diese können bei den Zubereitungen Zersetzungsprozesse auslösen, das Produkt ist unbrauchbar. Stabilisierende Rezepturen der Additive, im Besonderen zerfallsempfindliche Oxidationsmittel als Wirkstoff beinhaltend, werden durch die Herstellung und Verpackung in erfindungsgemäßen, dichtschließenden Behältern bereitgestellt und innerhalb einer Dosieranlage speziell mit Sprühvorrichtung dieser zugeführt. Rezeptur, Herstellungsbedingungen Verpackung, Transport, Lagerung und Zufuhr zu einem Applikationssystem (beispielsweise Sprühvorrichtung) in einer Dosieranlage bilden eine prozesssichere Verfahrensanwendung. Die gesamte Kette bis zur Verwendung innerhalb einer Dosieranlage findet lückenlos unter Luftabschluss statt. Die in der erfindungsgemäßen Zuführvorrichtung verwendende besonders bevorzugten Behälter, ausgeführt als kollabierbare, dichtschließende Beutel bestehen aus Kunststoff (beispielsweise PE, PP, PET) oder Komposit-Materialien, handelsüblich für den Zweck der Lebensmittelbevorratung. Versuche mit diesen Behältermaterialien haben ergeben, dass Formulierungen mit wässrigen Oxidationsmitteln keine Zersetzung oder Produktveränderung initiieren.

Die Anwendung der erfindungsgemäßen Zuführvorrichtung mit geschlossenem Behältersystem ermöglicht die Verarbeitung von stabilisierten, zerfallsempfindlichen Oxidationsmittel, besonders bevorzugt in Dosieranlagen mit Sprühsystem nach DE 10 2017 011 283 und Gebrauchsmuster DE 20 2017 007501 U1. Sie ist die technische Grundlage zur prozesssicheren Anwendung einer Sprühvorrichtung für Dosieranlagen zur Herstellung von konservierungsmittelfreien Farbformulierungen, so genannte Farbmischmaschinen, Dispensern.

Weiter eignet sich die Verwendung des Behältersystems A) auf Basis geschlossener Gebinde um den Zerfall von zerfallsempfindlichen Wirkstoffen, die gasförmige Zerfallsprodukte liefern, anzuzeigen. In diesem Fall bilden sich sichtbare Gasblasen oberhalb des Flüssigkeitsspiegels aus.

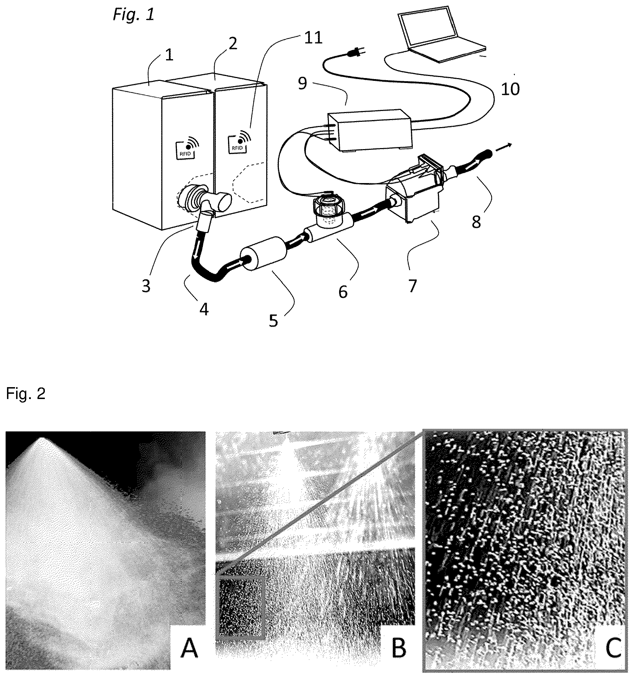

Im Folgenden wird die vorliegende Erfindung mit Bezug auf die Figur 1 erläutert. Figur 1 zeigt eine erfindungsgemäße Zuführvorrichtung zur Zuführung von flüssigen Medien M1 (z.B. von Additiven) in eine Dosiervorrichtung. Die Figur ist zur Veranschaulichung vereinfacht dargestellt. In einer erfindungsgemäßen Zuführvorrichtung sind wenigstens ein austauschbares Gebinde (hier konkret geschlossene Behälter (1,2)) und eine abgängige Strömungsverbindung zur Dosiervorrichtung angeordnet. Dabei ist der aktuell konnektierte Behälter (1) mit einem flüssigen Medium M1 (fluiden Additiv), nach einer speziellen Rezeptur befüllt. Bei der herkömmlichen Bereitstellung der Additive werden diese durch Umfüllen aus einer Handels- oder Verkehrsverpackung in einen starren Vorratsbehälter innerhalb der Dosieranlage aufgefüllt. Das hat den Nachteil, dass die Additive beim Befüllungsvorgang mit der Umgebungsluft in Kontakt treten. Dabei können Umweltkeime, Partikel aus der Luft und sonstige Verunreinigungen in das System gelangen. Dadurch können beispielsweise im Falle von desinfizierenden Additiven auf Basis von ROS unerwünschte Zersetzungsreaktionen ausgelöst werden. Zur Bereitstellung der erfindungsgemäßen Gebinde, werden speziell kollabierbare Beuteln mit Additiv-Zubereitungen entsprechend dem vorgesehenen Zweck hergestellt und unter Reinraumbedingungen abgefüllt. Das hat den Vorteil, dass eine Kontamination vermieden wird, z.B. weil die Additive zu keinem Zeitpunkt mit der Außenluft in Kontakt geraten. Die erfindungsgemäße Zuführvorrichtung kann zudem komplett unter Luftabschluss betrieben werden. Bei der abgebildeten Vorrichtung wird der Behälter (1) an eine Fördereinheit mit einem Anschluss (Konnektor) (3) an das Behälter A)-seitige Ende (4) des Leitungssystem angeschlossen. Eine Förderpumpe (7) transportiert die flüssige Zubereitung aus dem Behälter (1) über einen zwischengeschalteten Feinfilter (5) und einen Drucksensor (6) zur Verarbeitung in die Dosieranlage über die Anschlussleitung (8). Der Drucksensor (6) überwacht den Füllstand des Behälters (1) und den Zustand des der Pumpe vorgeschalteten Feinfilters. Entsteht im Behälter/Filtersystem ein Unterdruck führt das zum Auslösen des Drucksensors (6), als ein Hinweis auf einen entleerten Behälter und/oder eine unzureichende Durchlässigkeit des Filters. In diesem Fall muss entweder der entleerte Behälter (1) ausgetauscht werden, oder der Filter (5) gereinigt oder ersetzt werden. Das hat gegenüber der herkömmlichen Betriebsweise mit offenen, nachfüllbaren starren Systemen den Vorteil, dass die Zufuhr der Additive zur Dosiervorrichtung zuverlässig überwacht werden kann. Bei herkömmlichen Systemen muss der Füllstand regelmäßig überprüft werden. Üblicherweise wird der Verbrauch über die Betriebsdauer der Pumpe erfasst und vom manuell erfassten Füllstand durch Subtraktion der Dosiermenge berechnet. Das ist zum einen ungenau und erfordert die Mitwirkung eines Bedieners. Die Figur 1 zeigt eine bevorzugte Ausführung mit einem zweiten befüllten Behälter (2). Bei der Leermeldung des Behälters (1) kann durch Lösen der beidseitig selbstschließenden Schnellkupplung (3) des Behälters (1) und der Konnektierung mit Behälter (2) mit dem Betrieb der Vorrichtung fortgefahren werden. Der leere Behälter (1) wird entfernt und durch einen befüllten ersetzt. Durch die redundante Ausführung mit zwei Behältern ist eine Betriebsunterbrechung aufgrund von mangelndem Vorrat praktisch ausgeschlossen. Bei herkömmlichen Systemen ist immer nur ein Behälter vorhanden, der manuell nachbefüllt werden muss. Das bedeutet, dass zumindest für den Befüllvorgang ein Gefäß mit dem nachzufüllenden flüssigen Medium geöffnet und dieses umgefüllt werden muss. Dabei ist das Umfüllen von Gefahrstoffen, wie vielen ROS, nur für unterwiesene Personen mit entsprechenden Arbeitsschutzausrüstungen möglich. Bei der erfindungsgemäßen Zuführvorrichtung kann durch einfaches Lösen einer Verbindung und Herstellen einer Verbindung zu einem neuen Behälter sofort ohne wesentliche Unterbrechung der Betrieb aufrechterhalten werden. Es werden keine Anforderungen an den Arbeitsschutz notwendig, da es sich bei der erfindungsgemäßen Zuführvorrichtung um ein geschlossenes System nach den Regeln der Arbeitssicherheit (d.h. um eine trennende, technische Schutzmaßnahme) handelt. Eine Steuereinheit (9) versorgt die Sensoren und die Pumpe (7) mit Strom und erfasst die Impulse der Sensoren zur Weiterverarbeitung im Computergestützten Steuerungssystem. Das Steuerungssystem übernimmt die Aufgabe die Portionierung der Additive zur Weiterverarbeitung innerhalb einer Dosieranlage. Dabei werden Zeitprogramme, Dosiermengen und Pumpdauer von der Steuerungssoftware auf dem Rechner (10) auf die Steuereinheit (9) übertragen. Die Steuereinheit (9) kann so ausgestattet sein, dass nach der Übertragung der Daten vom Rechner die Zeit- und Pumpensteuerung autonom übernimmt. Die Steuereinheit (9) enthält dazu übliche Komponenten, wie eine eigene CPU-/Speichereinheit und eine Pufferbatterie, sodass selbst nach einem Herunterfahren des kompletten Systems oder bei Stromausfall die Steuerbefehle und die vorgegebenen Zeitprogramme nicht verloren gehen. Bei herkömmlichen Systemen sind die Steuerprogramme rechnergebunden, Kontroll- oder Steuerboxen übernehmen lediglich die Steuerung einer Dosierpumpe über das Computersystem /Software. Eine speziell für die Zuführung der Additive entwickelte Software erlaubt die genaue Festlegung der Dosiermengen und die Dosierzeiten. Sie kann so gestaltet sein, dass jeder Steuerbefehl beliebig sekundengenau nach Datum und Uhrzeit ausgeführt werden kann. Die Software übernimmt dabei die Ansteuerung der Pumpe und verarbeitet die Sensoren Impulse. Die Software erlaubt ebenfalls eine optionale Ventilansteuerung. Dadurch, dass die Software als "Stand-a-lone-Lösung" ausgeführt ist, ist sie auf verschiedene Dosieranlagen unabhängig von Hersteller und Fabrikat der Dosieranlagen anwendbar. Das ermöglicht die Anwendung der Zuführvorrichtung auf alle bekannten marktübliche Dosiermaschinen. Die Steuereinheit kann zusätzlich mit einem Netzwerk- oder W-LAN Modul ausgestattet sein, um die Zuführvorrichtung von einem externen Endgerät anzusteuern oder zu überwachen, oder um Updates zu installieren. Die Behälter (1,2) sind optional zusätzlich mit RFID-Chips (11) ausgestattet, sodass Angaben zur Rezeptur, Chargendaten, Mengen und Verfallsdaten durch einen entsprechenden Transponder in der Kontrolleinheit erfasst und an das Rechnersystem übermittelt werden können. Wenn der Steuerungsrechner über eine Verbindung mit dem Internet verfügt, kann somit auch die automatisierte Nachbestellung der Additive ausgelöst werden. Bei herkömmlichen Systemen muss der Vorrat der Aditive überwacht, und eine Bestellung ausgelöst werden. Angaben über Zusammensetzung und Produktdaten müssen im Bedarfsfall manuell erfasst werden.

Die erfindungsgemäße Zuführvorrichtung ermöglicht die Automatisierung der instrumentellen Konservierung von Farbmittel innerhalb von Dosieranlagen, so genannten Dispensern. Die "Instrumentelle Konservierung" (IK) ist im Bereich der apparativen Verarbeitung verderblicher Medien die automatisierte Bereitstellung und Adaption von bioziden Wirkstoffen und Stabilisatoren oder die Herstellung von biozid wirkenden Milieus mit einer technischen Vorrichtung zur kontrollierten Konservierung ohne den Einsatz klassischer Konservierungsmittel.

Während in der Patentanmeldung DE 10 2017 011 283 und dem Gebrauchsmuster DE 20 2017 007501 U1 sowie der EP 3 702 320 A1 und WO 2020 094258 A1 die Anwendung eines Sprühsystems innerhalb einer Dosieranlage beschrieben wird, werden die Zuführung der flüssigen Medien zur Sprühvorrichtung, die Ansteuerung und die Zusammensetzungen der eingesetzten Additive nicht offenbart. Überraschenderweise wurde nun gefunden, dass zum Ersatz von klassischen Konservierungsmitteln Wirkstoffe, die in ungefährliche Zerfallsprodukte zerfallen, hervorragend geeignet sind. In der Praxis hat sich gezeigt, dass beispielsweise die Anwendung eines Sprühsystems mit zerfallsempfindlichen Formulierungen aus offenen Zuführbehältern dazu führt, dass die Wirkstoffe zerfallen, bevor sie im Dosiersystem verarbeitet werden und somit in die konfektionierten Produkte gelangen. Die erfindungsgemäße Zuführvorrichtung ermöglicht die zerfallsgeschützte Herstellung, den Transport die Lagerung und die Zuführung zur Verarbeitung von zerfallsempfindlichen Zubereitungen in einem Dispenser in einer geschlossenen Kette. Das Befüllen von Vorratsbehältern am Verwendungsort entfällt. Weiterhin erlaubt die erfindungsgemäße Vorrichtung die Füllstandüberwachung der Additive und die autonome Ansteuerung der Zuführvorrichtung des Dosiersystems und übernimmt die Steuerung der nachgeschalteten Applikationsvorrichtungen, beispielsweise in Form eines Sprühsystems. Weiterhin können die Formulierungen der oxidativen Wirkstoffe so rezeptiert werden, dass sie bis zur Verarbeitung lagerstabil bleiben. In bisherigen Literaturquellen sind die Stabilisierung und die Ausgestaltung der Produktverpackung, Lager- und Transportbehälter nicht eindeutig beschrieben, für die erfindungsgemäße Anwendung sind diese angepasst. Mit der erfindungsgemäßen Zuführvorrichtung werden Additivformulierung, Fertigungsprozess, Lager-, Transport und Vorratsbehälter in einer Dosieranlage (Dispenser) als eine aufeinander abgestimmte, systematische Prozesskette beschrieben.

Unter Konfektionieren im Sinne der vorliegenden Erfindung wird das Fertigstellen eines Produktes verstanden. Damit umfasst sind alle Arbeiten, die nach dem Abfüllen der Komponenten zur Herstellung des verkaufsfertigen Produktes notwendig sind, wie beispielsweise das Veredeln, Mischen, Verpacken und/oder die Bildung von verkaufsfähigen Einheiten.

### BEVORZUGTE AUSFÜHRUNGSFORMEN DER ERFINDUNG

1. Vorrichtung zur Zuführung eines ersten flüssigen Mediums M1 in eine Dosiervorrichtung, in der wenigstens ein zweites flüssigen Medium M2 bevorratet und mit dieser dosiert wird, wobei die Zuführung in das zweite Medium M2 oder den darüber befindlichen und damit in direktem Kontakt stehenden Gasraum erfolgt, umfassend
   - ein Behältersystem A), das wenigstens ein austauschbares Gebinde umfasst, das ein erstes flüssiges Medium M1 enthält,
   - ein Leitungssystem zur Strömungsverbindung des Behältersystems A) mit der Dosiervorrichtung,
   - eine in das Leitungssystem integrierte Fördervorrichtung.
2. Vorrichtung nach Ausführungsform 1, die zusätzlich eine Verregnungsvorrichtung zur tropfenförmigen Zuführung des ersten flüssigen Mediums M1 in den über dem zweiten flüssigen Medium M2 befindlichen Gasraum aufweist.
3. Vorrichtung nach Ausführungsform 2, wobei das erste flüssige Mediums M1 dem Gasraum mit einem mittleren Tropfendurchmesser, bestimmt als Sauterdurchmesser nach DIN ISO 9276-2:2018-09, von 250 bis 1500 µm, bevorzugt von 300 bis 1200 µm, zugeführt wird.
4. Vorrichtung nach Ausführungsform 2 oder 3, wobei das erste flüssige Mediums M1 dem Gasraum tropfenförmig mit einer monodispersen Tropfenverteilung zugeführt wird.
5. Vorrichtung nach einer der Ausführungsformen 1 bis 4, wobei das Behältersystem A) als austauschbares Gebinde wenigstens einen kollabierbaren Beutel umfasst, der ein erstes flüssiges Medium M1 enthält.
6. Vorrichtung nach einer der Ausführungsformen 1 bis 5, wobei in das Leitungssystem wenigstens ein Füllstandsensor für das Behältersystem A), insbesondere ein Unterdrucksensor, integriert ist.
7. Vorrichtung nach einem der vorhergehenden Ausführungsformen, wobei in das Leitungssystem wenigstens ein Filter integriert ist.
8. Vorrichtung nach einer der vorhergehenden Ausführungsformen, wobei die Dosiervorrichtung, der das erste flüssige Medium M1 zugeführt wird, wenigstens einen Behälter B) umfasst, der ein flüssiges Medium M2 enthält.
9. Vorrichtung nach Ausführungsform 8, wobei das Leitungssystem das Behältersystem A) entweder direkt oder über eine Verteilereinheit mit wenigstens einem Behälter B) verbindet.
10. Vorrichtung nach Ausführungsform 8 oder 9, wobei der wenigstens eine Behälter B) eine Deckelkonstruktion aufweist, über die der Behälter B) mit wenigstens einem flüssigen Medium M2 befüllt werden kann.
11. Vorrichtung nach einer der Ausführungsformen 8 bis 10, wobei das Leitungssystem, das das Behältersystems A) mit wenigstens einem Behälter B) verbindet im oberen Bereich des Behälters B) mündet, vorzugsweise im Gasraum oberhalb der maximalen Füllhöhe des flüssigen Mediums M2.
12. Vorrichtung nach Ausführungsform 11, wobei das Leitungssystem, das das Behältersystems A) mit wenigstens einem Behälter B) verbindet im Bereich der Deckelkonstruktion des Behälters B) mündet und das erste flüssige Medium M1 dem Behälter B) in Form von Tropfen, insbesondere als Aerosol, zugeführt wird.
13. Vorrichtung nach Ausführungsform 11 oder 12, wobei das erste flüssige Medium M1 dem Behälter B) in Form von Tropfen mit einem mittleren Partikeldurchmesser, bestimmt als Sauterdurchmesser nach DIN ISO 9276-2:2018-09, von 250 bis 1500 µm, bevorzugt von 300 bis 1200 µm, zugeführt wird.
14. Vorrichtung nach einer der vorhergehenden Ausführungsformen, wobei das Medium M1 ausgewählt ist unter Lösungs- oder Dispergiermitteln, Mitteln, die einer Verkeimung entgegenwirken, und Mischungen davon.
15. Vorrichtung nach einer der vorhergehenden Ausführungsformen, wobei das Medium M1 wenigstens eine Komponente enthält, ausgewählt unter
   - reaktiven Sauerstoffspezies, insbesondere Wasserstoffperoxid und/oder wenigstens einer Wasserstoffperoxidquelle,
   - Metallsalzen und/oder kolloidal vorliegenden Metallen, speziell Silbersalzen und/oder kolloidal vorliegendem Silber,
   - Phosphorverbindungen, insbesondere Phosphorsäure, Oligo- und Polyphosphorsäuren, phosphoriger Säure und den Salzen und Estern davon,
   - Chlorverbindungen, insbesondere Natriumhypochlorit,
   - Wasser,
   - Mischungen davon.
16. Vorrichtung nach einer der vorhergehenden Ausführungsformen, wobei es sich bei der Dosiervorrichtung, der das erste flüssige Medium M1 zugeführt wird, um eine Vorrichtung zum Abfüllen und/oder Dosieren von Farbstoffzusammensetzungen handelt.
17. Vorrichtung nach Ausführungsform 16, die einen bis 36 Behälter B) umfasst, die als flüssiges Medium M2 jeweils gleiche oder verschiedene Farbmittel enthalten, wobei verschiedene Farbmittel sich vorzugsweise in wenigstens einer Eigenschaft, ausgewählt unter Farbton, Helligkeit und Farbstärke, unterscheiden.
18. Vorrichtung nach einer der Ausführungsformen 8 bis 17, wobei die flüssigen Medien M2 in den Behältern B) durch Rührvorrichtungen und/oder durch Umwälzen homogenisiert werden.
19. Verfahren zur Zuführung eines ersten flüssigen Mediums M1 in eine Dosiervorrichtung, in der wenigstens ein zweites flüssigen Medium M2 bevorratet und mit dieser dosiert wird, wobei die Zuführung in das zweite Medium M2 oder den darüber befindlichen und damit in direktem Kontakt stehenden Gasraum erfolgt, wobei die Zuführung mit einer Vorrichtung erfolgt, wie in einer der Ausführungsformen 1 bis 18 definiert.
20. Verfahren nach Ausführungsform 19, wobei die Vorrichtung
   - ein Behältersystem A), das wenigstens ein austauschbares Gebinde umfasst, das ein erstes flüssiges Medium M1 enthält,
   - ein Leitungssystem zur Strömungsverbindung des Behältersystems A) mit der Dosiervorrichtung,
   - eine in das Leitungssystem integrierte Fördervorrichtung.
   - eine Verregnungsvorrichtung zur tropfenförmigen Zuführung des ersten flüssigen Mediums M1 in den über dem zweiten flüssigen Medium M2 befindlichen Gasraum,
   umfasst, wobei das erste flüssige Medium M1 dem Gasraum mit einem mittleren Partikeldurchmesser, bestimmt als Sauterdurchmesser nach DIN ISO 9276-2:2018-09 , von 250 bis 1500 µm, bevorzugt von 300 bis 1200 µm, zugeführt wird.
21. Verfahren nach Ausführungsform 19 oder 20, wobei das erste flüssige Mediums M1 dem Gasraum tropfenförmig mit einer monodispersen Tropfenverteilung zugeführt wird.
22. Verwendung einer Dosiervorrichtung mit einer Zuführvorrichtung, wie in einer der Ausführungsformen 1 bis 18 definiert, zur Verlängerung der maximalen Standzeit wenigstens eines flüssigen Mediums M2 in der Dosiervorrichtung.
23. Verwendung einer Dosiervorrichtung mit einer Zuführvorrichtung, wie in einer der Ausführungsformen 1 bis 18 definiert, zum Abfüllen und/oder Dosieren von Farbstoffzusammensetzungen, insbesondere zum Abfüllen und/oder Dosieren von pigmenthaltigen Farbstoffzusammensetzungen.
24. Dosiervorrichtung mit einer Zuführvorrichtung, wie in einer der Ausführungsformen 1 bis 18 definiert, umfassend eine elektronische Steuerung und eine Computeranbindung mit Dosiersoftware.
25. Konservierungsmittel für eine Farbstoffzusammensetzung, enthaltend
   a) wenigstens eine Komponente, ausgewählt unter
      a1) wenigstens einer reaktiven Sauerstoffspezies,
      a2) wenigstens einem Metallsalz und/oder einem kolloidal vorliegenden Metall,
      und Mischungen enthaltend wenigstens eine Komponente a1) und wenigstens eine Komponente a2),
   b) gegebenenfalls wenigstens eine Phosphorverbindung, ausgewählt unter Phosphorsäure und den Salzen und Estern davon, Oligo- und Polyphosphorsäuren und den Salzen davon, phosphoriger Säure und den Salzen und Estern davon,
   c) gegebenenfalls wenigstens eine Chlorverbindungen, insbesondere Natriumhypochlorit, und
   d) Wasser,
   mit der Maßgabe, dass wenn die Zusammensetzung wenigstens eine Komponente a1) und wenigstens eine Komponente a2) enthält, diese auch wenigstens eine Phosphorverbindung b) enthält.
26. Verwendung einer Zusammensetzung, enthaltend
   a) wenigstens eine Komponente, ausgewählt unter
      a1) wenigstens einer reaktiven Sauerstoffspezies,
      a2) wenigstens einem Metallsalz und/oder einem kolloidal vorliegenden Metall,
      und Mischungen enthaltend wenigstens eine Komponente a1) und wenigstens eine Komponente a2),
   b) gegebenenfalls wenigstens eine Phosphorverbindung, ausgewählt unter Phosphorsäure und den Salzen und Estern davon, Oligo- und Polyphosphorsäuren und den Salzen davon, phosphoriger Säure und den Salzen und Estern davon,
   c) gegebenenfalls wenigstens eine Chlorverbindungen, insbesondere Natriumhypochlorit, und
   d) Wasser,

   mit der Maßgabe, dass wenn die Zusammensetzung wenigstens eine Komponente a1) und wenigstens eine Komponente a2) enthält, diese auch wenigstens eine Phosphorverbindung b) enthält,
   zur Behandlung einer Vorrichtung zum Abfüllen und/oder Dosieren von Farbstoffzusammensetzungen, um einer Verkeimung entgegenzuwirken.

### FIGURENBESCHREIBUNG

Im Folgenden wird die vorliegende Erfindung mit Bezug auf die Figur 1 erläutert. Die ausgeführten Möglichkeiten sind nur als Beispiele und nicht als Einschränkung auf diese Möglichkeiten zu verstehen.

### Bezugszeichenliste

1) Behälter der Behältereinheit (A)
2) Behälter der Behältereinheit (A)
3) Anschluss
4) Behältersystem A)-seitiges Ende des Leitungssystems
5) Filter mit Rückschlagventil
6) Füllstandsensor
7) Fördervorrichtung
8) Dosiervorrichtungs-seitiges Ende des Leitungssystems
9) Steuereinheit
10) Rechnereinheit
11) RFID-Transponder

Figur 1 zeigt eine erfindungsgemäße Vorrichtung zur Zuführung eines flüssigen Mediums (Zuführvorrichtung) mit einem Behältersystem A), das zwei Behälter (1) und (2) umfasst, wobei aktuell Behälter (1) mittels Anschluss (3) an das Behältersystem A)-sei-tige Ende (4) des Leitungssystem angeschlossen ist. Die Behälter (1) und (2) sind als austauschbare Gebinde ausgeführt oder können ein austauschbares Gebinde, z.B. in Form eines kollabierbaren Beutels, aufnehmen. Das Leitungssystem umfasst (optional) einen Filter mit Rückschlagventil (5), (ebenfalls optional) einen Füllstandsensor (6) und eine Fördervorrichtung (7) und ist über das Ende (8) mit einer Dosiervorrichtung (nicht abgebildet) verbunden. Die Gebinde (1,2) verfügen jeweils über ein lesbares Speichermedium (11) als Datenträger, der mit Produktdaten der in den Behältern enthaltenen flüssigen Medien M1 beschrieben ist. In der dargestellten Ausführung werden RFID-Transponder als Speichermedien eingesetzt. Die Zuführvorrichtung und/oder die Dosiervorrichtung verfügen über Lesegeräte mit denen die auf dem Datenträger gespeicherten Daten automatisch gelesen und über ein Interface direkt an die Rechnereinheit (10) übertragen werden. Die Rechnereinheit analysiert die jeweiligen Betriebsparameter und verwendet diese zur Steuerung der Zuführung des Mediums M1 und in der Regel auch zur Dosierung des Mediums M2 in der (nicht abgebildeten) Dosiervorrichtung.

Figur 2 zeigt ein polydisperses Aerosol gemäß Stand der Technik (A) mit einer Tropfengröße im Bereich von weniger als 100 bis 300 µm im Vergleich zu einem erfindungsgemäßen monodispersen Aerosol (B) mit einer Tropfengröße im Bereich von 300 bis 1200 µm. (C) ist eine Ausschnittvergrößerung von (B).

## Patentansprüche

1. Vorrichtung zur Zuführung eines ersten flüssigen Mediums M1 in eine Dosiervorrichtung, in der wenigstens ein zweites flüssigen Medium M2 bevorratet und mit dieser dosiert wird, wobei die Zuführung in das zweite Medium M2 oder den darüber befindlichen und damit in direktem Kontakt stehenden Gasraum erfolgt, umfassend
- ein Behältersystem A), das wenigstens ein austauschbares Gebinde umfasst, das ein erstes flüssiges Medium M1 enthält,
- ein Leitungssystem zur Strömungsverbindung des Behältersystems A) mit der Dosiervorrichtung,
- eine in das Leitungssystem integrierte Fördervorrichtung.

2. Vorrichtung nach Anspruch 1, die zusätzlich eine Verregnungsvorrichtung zur tropfenförmigen Zuführung des ersten flüssigen Mediums M1 in den über dem zweiten flüssigen Medium M2 befindlichen Gasraum aufweist.

3. Vorrichtung nach Anspruch 2, wobei das erste flüssige Mediums M1 dem Gasraum mit einem mittleren Tropfendurchmesser, bestimmt als Sauterdurchmesser nach DIN ISO 9276-2:2018-09, von 250 bis 1500 µm, bevorzugt von 300 bis 1200 µm, zugeführt wird.

4. Vorrichtung nach Anspruch 2 oder 3, wobei das erste flüssige Mediums M1 dem Gasraum tropfenförmig mit einer monodispersen Tropfenverteilung zugeführt wird.

5. Vorrichtung nach einem der Ansprüche 1 bis 4, wobei das Behältersystem A) als austauschbares Gebinde wenigstens einen kollabierbaren Beutel umfasst, der ein erstes flüssiges Medium M1 enthält.

6. Vorrichtung nach einem der Ansprüche 1 bis 5, wobei in das Leitungssystem
- wenigstens ein Füllstandsensor für das Behältersystem A), insbesondere ein Unterdrucksensor, und/oder
- wenigstens ein Filter
integriert ist.

7. Vorrichtung nach einem der vorhergehenden Ansprüche, wobei die Dosiervorrichtung, der das erste flüssige Medium M1 zugeführt wird, wenigstens einen Behälter B) umfasst, der ein flüssiges Medium M2 enthält, wobei das Leitungssystem das Behältersystem A) entweder direkt oder über eine Verteilereinheit mit dem wenigstens einen Behälter B) verbindet.

8. Vorrichtung nach Anspruch 7, wobei der wenigstens eine Behälter B) eine Deckelkonstruktion aufweist, über die der Behälter B) mit wenigstens einem flüssigen Medium M2 befüllt werden kann.

9. Vorrichtung nach Anspruch 8, wobei das Leitungssystem, das das Behältersystems A) mit wenigstens einem Behälter B) verbindet im Bereich der Deckelkonstruktion des Behälters B) mündet und das erste flüssige Medium M1 dem Behälter B) in Form von Tropfen, bevorzugt als Aerosol, insbesondere in Form von Tropfen mit einem mittleren Partikeldurchmesser, bestimmt als Sauterdurchmesser nach DIN ISO 9276-2:2018-09, von 250 bis 1500 µm zugeführt wird.

10. Vorrichtung nach einem der vorhergehenden Ansprüche, wobei das Medium M1 ausgewählt ist unter Lösungs- oder Dispergiermitteln, Mitteln, die einer Verkeimung entgegenwirken, und Mischungen davon, wobei das Medium M1 bevorzugt wenigstens eine Komponente enthält, ausgewählt unter
- reaktiven Sauerstoffspezies, insbesondere Wasserstoffperoxid und/oder wenigstens einer Wasserstoffperoxidquelle,
- Metallsalzen und/oder kolloidal vorliegenden Metallen, speziell Silbersalzen und/oder kolloidal vorliegendem Silber,
- Phosphorverbindungen, insbesondere Phosphorsäure, Oligo- und Polyphosphorsäuren, phosphoriger Säure und den Salzen und Estern davon,
- Chlorverbindungen, insbesondere Natriumhypochlorit,
- Wasser,
- Mischungen davon.

11. Vorrichtung nach einem der vorhergehenden Ansprüche, wobei es sich bei der Dosiervorrichtung, der das erste flüssige Medium M1 zugeführt wird, um eine Vorrichtung zum Abfüllen und/oder Dosieren von Farbstoffzusammensetzungen handelt, bevorzugt um eine Vorrichtung, die einen bis 36 Behälter B) umfasst, die als flüssiges Medium M2 jeweils gleiche oder verschiedene Farbmittel enthalten, wobei verschiedene Farbmittel sich vorzugsweise in wenigstens einer Eigenschaft, ausgewählt unter Farbton, Helligkeit und Farbstärke, unterscheiden.

12. Verfahren zur Zuführung eines ersten flüssigen Mediums M1 in eine Dosiervorrichtung, in der wenigstens ein zweites flüssigen Medium M2 bevorratet und mit dieser dosiert wird, wobei die Zuführung in das zweite Medium M2 oder den darüber befindlichen und damit in direktem Kontakt stehenden Gasraum erfolgt, wobei die Zuführung mit einer Vorrichtung erfolgt, wie in einem der Ansprüche 1 bis 11 definiert.

13. Verfahren nach Anspruch 12, wobei die Vorrichtung
- ein Behältersystem A), das wenigstens ein austauschbares Gebinde umfasst, das ein erstes flüssiges Medium M1 enthält,
- ein Leitungssystem zur Strömungsverbindung des Behältersystems A) mit der Dosiervorrichtung,
- eine in das Leitungssystem integrierte Fördervorrichtung.
- eine Verregnungsvorrichtung zur tropfenförmigen Zuführung des ersten flüssigen Mediums M1 in den über dem zweiten flüssigen Medium M2 befindlichen Gasraum,
umfasst, wobei
bevorzugt das erste flüssige Medium M1 dem Gasraum mit einem mittleren Partikeldurchmesser, bestimmt als Sauterdurchmesser nach DIN ISO 9276-2:2018-09, von 250 bis 1500 µm zugeführt wird und/oder das erste flüssige Medium M1 dem Gasraum tropfenförmig mit einer monodispersen Tropfenverteilung zugeführt wird.

14. Verwendung einer Dosiervorrichtung mit einer Zuführvorrichtung, wie in einem der Ansprüche 1 bis 11 definiert,
- zur Verlängerung der maximalen Standzeit wenigstens eines flüssigen Mediums M2 in der Dosiervorrichtung, und/oder
- zum Abfüllen und/oder Dosieren von Farbstoffzusammensetzungen, insbesondere zum Abfüllen und/oder Dosieren von pigmenthaltigen Farbstoffzusammensetzungen.

15. Konservierungsmittel für eine Farbstoffzusammensetzung, enthaltend
a) wenigstens eine Komponente, ausgewählt unter
a1) wenigstens einer reaktiven Sauerstoffspezies,
a2) wenigstens einem Metallsalz und/oder einem kolloidal vorliegenden Metall,
und Mischungen enthaltend wenigstens eine Komponente a1) und wenigstens eine Komponente a2),
b) gegebenenfalls wenigstens eine Phosphorverbindung, ausgewählt unter Phosphorsäure und den Salzen und Estern davon, Oligo- und Polyphosphorsäuren und den Salzen davon, phosphoriger Säure und den Salzen und Estern davon,
c) gegebenenfalls wenigstens eine Chlorverbindungen, insbesondere Natriumhypochlorit, und
d) Wasser,
mit der Maßgabe, dass wenn die Zusammensetzung wenigstens eine Komponente a1) und wenigstens eine Komponente a2) enthält, diese auch wenigstens eine Phosphorverbindung b) enthält.
